# EUROPEAN PATENT APPLICATION

(11) **EP 3 528 092 A1**
(43) Date of publication of application: **21.08.2019**
(21) Application number: 18156886.6
(22) Date of filing: 15.02.2018
(51) Int. Cl.: G06F 3/01, G03H 1/00, G06F 3/03, G06F 3/0346, G06F 3/0354

(54) **THREE DIMENSIONAL INPUT DEVICE AND INPUT METHOD**

(71) Applicant: Vestel Elektronik Sanayi ve Ticaret A.S., 45030 Manisa (TR)
(72) Inventor: DÖNER, Cagdas, 45030 Manisa (TR)
(74) Representative: Ascherl, Andreas

(57) **Abstract**

The present invention provides three dimensional input device (100, 200, 300, 400, 500, 600), the three dimensional input device (100, 200, 300, 400, 500, 600) comprising a holographic display (101, 201, 401, 501, 601) arranged in a ground plane (102) of the three dimensional input device (100, 200, 300, 400, 500, 600) and configured to display a three dimensional object (103, 403), a movable input device (105, 305, 505, 605) configured to move over the holographic display (101, 201, 401, 501, 601), a position sensor (106) configured to determine the position of the movable input device (105, 305, 505, 605) over the holographic display (101, 201, 401, 501, 601), and a processing device (108) that is coupled to the holographic display (101, 201, 401, 501, 601) and the position sensor (106) and that is configured to modify the three dimensional object (103, 403) based on the detected position of the movable input device (105, 305, 505, 605) and to control the holographic display (101, 201, 401, 501, 601) to display the modified three dimensional object (103, 403). Further, the present invention provides a respective method.

## Description

### TECHNICAL FIELD

The invention relates to a three dimensional input device and a respective input method.

### BACKGROUND

Although applicable to any computer device as input device, the present invention will mainly be described in conjunction with personal computers or as standalone device.

In the field of computers, a plurality of different input devices are used. Possible input devices include devices such as keyboards, mice and the like. Especially in the field of product designs or graphic design drawing tablets may be used that allow a designer to draw on the tablet with a pen like input device.

Such drawing tablets usually are connected to the computer via a USB connection and designers may draw or design objects in respective programs. Any drawing will be instantly transferred to the computer screen and be shown by the respective program.

Especially in the field of product design the designers usually create a 3D design. However, the use of drawing tablets on PCs only allows the designers to work in a 2D environment. This means that they have to design 3D objects by rotating them in the required position to work on the details of the objects.

Accordingly, there is a need for providing an improved method for creating 3D designs.

### SUMMARY OF THE INVENTION

The present invention provides a three dimensional input device with the features of claim 1 and an input method with the features of claim 9.

Accordingly, it is provided:

A three dimensional input device, the three dimensional input device comprising a holographic display arranged in a ground plane of the input device and configured to display a three dimensional object, a movable input device configured to move over the holographic display, a position sensor configured to determine the position of the movable input device over the holographic display, and a processing device that is coupled to the holographic display and the position sensor and that is configured to modify the three dimensional object based on the detected position of the movable input device and to control the holographic display to display the modified three dimensional object.

Further, it is provided:

An input method for receiving three dimensional input, the input method comprising determining a position of a movable input device over a holographic display, modifying a three dimensional object based on the determined position of the movable input device, and controlling the holographic display to display the modified three dimensional object.

The present invention is based on the finding that designing three dimensional objects in a two dimensional environment may be difficult for the designer.

The present invention therefore provides the input device that allows a user, e.g. a designer, to use the movable input device over the holographic surface to directly design an object in three dimensional space.

In this context the term object refers to a virtual object that may exist in the form of digital data and may be displayed via a holographic display, and e.g. on a PC on a 2D screen.

Holography is the science and practice of making holograms. Typically, a hologram is a photographic recording of a light field, rather than of an image formed by a lens, and it is used to display a three dimensional image of the holographed object, which can be seen without the aid of special glasses or other intermediate optics. The hologram itself is not an image. Rather, it is an encoding of the light field as an interference pattern of seemingly random variations in the opacity, density, or surface profile of the photographic medium.

The holographic display may be a type of display that utilizes light diffraction to create a virtual three dimensional image of the three dimensional object. The holographic display is unique from other forms of 3D imaging in that it does not require the aid of any special glasses or external equipment for a viewer to see the image.

The holographic display may comprise one of several holographic display technologies like a laser plasma display, a micromagnetic piston display, a holographic television display, a touchable hologram or the like.

The holographic display may display the three dimensional object in three dimensional space. Usually, such a display will be provided by the processing device with information about the object to be displayed. It is understood, that any type of object may be displayed as three dimensional object by the holographic display.

The present invention in addition to the mere displaying of a three dimensional object also allows a user to directly modify the three dimensional object while it is being displayed by the holographic display.

To this end, the input device provides the user with the movable input device. The movable input device may e.g. be a pen like device that a user may hold in his hand like a pen. It is however understood, that any other shape is possible for the movable input device. The movable input device may e.g. have the form of a ring or of a pistol grip or the like.

While the user moves the movable input device over the holographic display, the position sensor will determine or measure the position of the movable input device and provide respective information to the processing device.

The information that is provided by the position sensor to the movable input device allows the processing device to determine the position of the movable input device in relation to the three dimensional object that is momentarily displayed by the holographic display. Therefore, the processing device may perform or calculate modifications of the three dimensional object depending on the position of the movable input device.

This allows the processing device for example to bend the three dimensional object at the respective position, or to remove material from the three dimensional object at the respective position, or to add material to the three dimensional object at the respective position.

The processing device will then provide the holographic display with information of control signals that reflect the modified three dimensional object and the holographic display will instantly display the modified three dimensional object.

With the help of the present invention, the user may therefore directly interact with the three dimensional object that is displayed by the holographic display. Thus, the user may create a three dimensional design directly in three dimensional space without the need to use an auxiliary solution like 2D screens.

It is understood, that the processing device may be a PC or any other type of computing device that may be connected to the holographic display and/or the position sensor via a wired or a wireless connection, like e.g. a USB connection or a Bluetooth connection.

Further embodiments of the present invention are subject of the further subclaims and of the following description, referring to the drawings.

In an embodiment, the movable input device may comprise a number, i.e. at least one or more, e.g. a plurality, of user input devices and is configured to provide status information about the user input devices to the processing device, wherein the processing device is configured to modify the three dimensional object based on the status information of the user input devices.

The movable input device may e.g. comprise buttons that a user may push while holding the movable input device. This allows the user to select specific functions of the movable input device. It is understood, that these functions may be configurable, e.g. by the user or by the processing device.

Possible functions may e.g. include functions like "add matter" or "remove matter". This means while no one of the user input devices is actuated or activated by a user, the user may move the movable input device over the holographic display without the processing device performing any modifications. However, as soon as the user actuates or activates one of the user input devices, the processing device will start performing the respective function.

In the case of the "add matter" function, the processing device will start adding matter at the respective position. This means, that the user may e.g. start with a blank display, i.e. no object or an empty object, or any other object. Adding matter may be understood as displaying a solid element or object at the respective position. If the user then moves the movable input device while actuating the respective user input device, the processing device may create one single connected object.

In contrast, if the "remove matter" function is selected by the user, the processing device may start removing matter of the three dimensional object at the respective position. Removing matter may refer to cutting out a section of the three dimensional object at the respective positions.

Another operation may e.g. refer to the mesh that forms the three dimensional object and may comprise moving single vertexes of the mesh.

The functions that a designer may perform on the three dimensional object may be seen as a virtual form of manufacturing processes, like e.g. 3D printing (add matter), or milling or drilling (remove matter).

It is understood, that the movable input device may e.g. be connected to the processing device via a wired or a wireless connection. Further, the movable input device may comprise an energy supply, like e.g. a battery, or may be supplied via a wired connection with electrical power.

In another embodiment, the position sensor may comprise a plurality of optical sensors arranged in a grid-like arrangement, e.g. organized in columns and rows, on the holographic display, wherein the movable input device comprises a light emitting device configured to emit light to the optical sensors, and wherein the position sensor further comprises a position processing unit configured to determine the position of the movable input device in relation to the holographic display based on the light received by the optical sensors.

The optical sensors form a grid or Cartesian detector arrangement and may comprise a predetermined number of rows and columns. This Cartesian detector arrangement may detect the position of the movable input device based on the light, e.g. laser light, that is emitted by the movable input device. The movable input device may e.g. emit a laser light directly to the optical sensors. Since the optical sensors are arranged in a grid or Cartesian detector arrangement, every optical sensor may be seen as a cell or pixel. Therefore, the single optical sensor that receives the laser light from the movable input device allows directly determining the position of the movable input device over the holographic display. The processing device may e.g. calculate the position of the movable input device based on the row number and column number of the respective optical sensor multiplied with the distance between the optical sensors or the size of the grid cells.

The optical sensors therefore allow the processing device to determine the position of the movable input device in a plane parallel to the surface of the holographic display.

In the above described arrangement, the number of optical sensors or rows and columns of the Cartesian detector arrangement will determine the resolution for determining the position of the movable input device.

In an embodiment, the movable input device may comprise a distance sensor configured to measure the distance between the movable input device and a surface of the holographic display and to provide respective distance information to the processing device. As alternative, the optical sensors may each comprise a distance sensor configured to measure the distance between the movable input device and a surface of the holographic display and to provide respective distance information to the processing device.

The distance sensor may e.g. be a laser based distance sensor or an ultrasonic based distance sensor. With the help of the distance sensor it is now possible to determine the distance between the surface of the holographic display and the movable input device.

If the surface of the holographic display is thought of as the X,Y plane of a Cartesian coordinate system, the distance may be thought of as the Z axis of the Cartesian coordinate system. The origin (X=0, Y=0, Z=0) of the Cartesian coordinate system may e.g. be aligned with a corner of the holographic display. The processing device may therefore easily calculate the position of the movable input device in the Cartesian coordinate system.

In a further embodiment, the position sensor may comprise a plurality, i.e. two or more, of light emitting elements arranged on the holographic display, and the movable input device may comprise a light sensor configured to detect the intensity of the incoming light for every one of the light emitting elements, wherein the movable input device may comprise a position determination unit configured to determine the position of the movable input device in relation to the light emitting elements based on the detected intensities.

The light emitting elements may each emit light of different wavelengths or may emit light at respective intervals such that only one light emitting element emits light at every point in time. As further alternative, the emitted light of every light emitting element may e.g. be modulated with a specific frequency. This allows the light sensor to separately process the incoming light of every light emitting element and determine the intensity of the incoming light separately for every light emitting element. The position determination unit may then perform a kind of triangulation by setting the single intensities into relation to teach other and determine the position of the movable input device based on the measured intensities. Since the position of the light emitting elements is known, the position determination unit may then also determine the position of the movable input device.

Depending on the type of triangulation, this method may only serve to calculate the X,Y position of the movable input device, i.e. the position in a plane parallel to the surface of the holographic display. It is understood, that in this case, the movable input device or the position sensor may comprise the above mentioned distance sensor.

In an embodiment, the position sensor may comprise a number of cameras, i.e. one or more, arranged around the holographic display that are coupled to the processing device, wherein the movable input device may comprise a marker that is detectable by the cameras, wherein the processing device may be configured to determine the position of the movable input device based on the camera images of the cameras.

The cameras may e.g. be infrared sensitive cameras and the marker may be an active infrared emitting marker or a passive infrared reflecting marker. It is however understood, that any other type of camera and marker combination is also possible. With the help of the cameras it is also possible to track the movement of the movable input device. Similarly to the above described triangulation, the marker may be identified in the camera images. Based on known positions and orientations of the cameras and the position of the marker in the images recorded by the cameras the position of the movable input device may be calculated. It is also possible to perform a calibration that derives the positions and orientations of the cameras. To this end, the movable input device may e.g. be directed to predetermined positions by indicating these positions to the user via the holographic display.

In another embodiment, the input device may comprise control input devices coupled to the processing device, wherein the processing device may be configured to adapt the display of the three dimensional object via the holographic display according to user input received via the control input devices.

The control input devices may e.g. be buttons, knobs, switches or encoders that may e.g. be arranged on the outer perimeter or circumference of the holographic display, e.g. in or on a base plate of the input device.

The control input devices may e.g. provide user controls for rotating and/or zooming and/or positioning the three dimensional object on the holographic display. This means that the processing device will rotate and/or zoom and/or position the three dimensional object according to any user inputs that a user may provide on the control input devices.

Another control input device may serve to switch a display mode. Possible display modes comprise a mesh mode, where the mesh of the three dimensional object is shown, a solid mode, where the object is shown as a solid object, and the like.

In a further embodiment, the input device may comprise a communication interface configured to output object data of the three dimensional object.

The communication interface may e.g. be a USB interface, a LAN interface, a Bluetooth interface, a WIFI interface or the like, that couples the input device e.g. to a PC. This means that the input device may be used without a PC to design the three dimensional object. After the design is finished, the data regarding the three dimensional object may then be provided to the PC. Instead of a computer like a PC any other device may be connected to the input device. For example a 3D printer may be connected to the input device.

It is further also possible that the input device may be coupled to the PC or another computer while the design is being worked on by a user. In this case, for example a program may be executed on the computer that shows the current state of the three dimensional object.

It is further possible that all or at least some functions of the input device, especially of the processing device, may be performed by the computer. The computer or program being executed may for example determine the position of the movable input device with respect to the holographic display. Further, the computer or program being executed may also perform the necessary calculations for modifying or adapting the three dimensional object.

### BRIEF DESCRIPTION OF THE DRAWINGS

For a more complete understanding of the present invention and advantages thereof, reference is now made to the following description taken in conjunction with the accompanying drawings. The invention is explained in more detail below using exemplary embodiments which are specified in the schematic figures of the drawings, in which:
Fig. 1 shows a block diagram of an embodiment of an input device according to the present invention;
Fig. 2 shows a block diagram of another embodiment of a three dimensional input device according to the present invention;
Fig. 3 shows a block diagram of another embodiment of a three dimensional input device according to the present invention;
Fig. 4 shows a block diagram of another embodiment of a three dimensional input device according to the present invention;
Fig. 5 shows a block diagram of another embodiment of a three dimensional input device according to the present invention;
Fig. 6 shows a block diagram of another embodiment of a three dimensional input device according to the present invention; and
Fig. 7 shows a flow diagram of an embodiment of an input method according to the present invention.

In the figures like reference signs denote like elements unless stated otherwise.

### DETAILED DESCRIPTION OF THE DRAWINGS

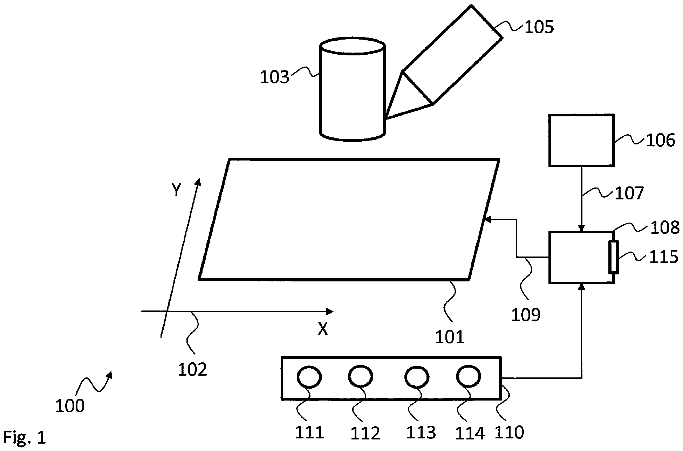

Fig. 1 shows a block diagram of a three dimensional input device 100. The three dimensional input device 100 comprises a holographic display 101 that is arranged in a ground plane 102 of the three dimensional input device 100 and that displays a three dimensional object 103. Further, the three dimensional input device 100 comprises a movable input device 105 that a user may move over the holographic display 101, and a position sensor 106 that determines the position of the movable input device 105 over the holographic display 101 and provides respective position information 107. In addition, the three dimensional input device 100 comprises a processing device 108 that is coupled to the holographic display 101 and the position sensor 106. The three dimensional input device 100 further comprises an optional control input device 110 that is also coupled to the processing device 108 and comprises four exemplary buttons 111, 112, 113, 114. It is understood, that any other number of buttons or other input types are possible. Further, the processing device 108 comprises an optional communication interface 115 that may e.g. be used to output data about the three dimensional object 103 to e.g. a computer.

During operation of the three dimensional input device 100 a user may hold the movable input device 105 e.g. like a pen and move the movable input device 105 over the holographic display 101. This may include moving the movable input device 105 around or into the displayed three dimensional object 103. In the three dimensional input device 100 movable input device 105 serves for the user to modify the three dimensional object 103 while it is displayed by the holographic display 101.

To this end, the position sensor 106 determines the position of the movable input device 105 over the holographic display 101 and provides respective position information 107 to the processing device 108.

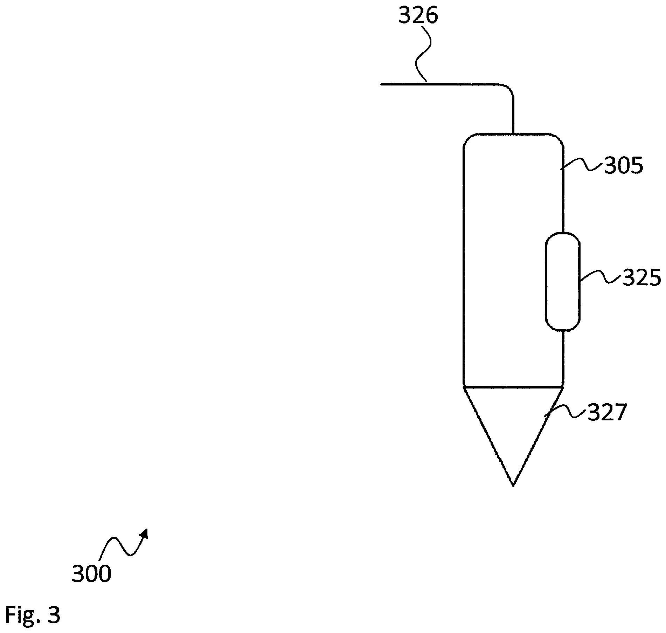

The processing device 108 then modifies the three dimensional object 103 based on the detected position of the movable input device 105. Modifying in this context refers to modifying the data that describes the three dimensional object 103 e.g. in a memory of the processing device 108. In any case, the modifications performed by the processing device 108 will reflect the movements of the movable input device 105 as detected by the position sensor 106. Modifying may comprise any structural modification, like e.g. bending, extending (adding matter) or reducing (removing matter) at the position at which the user holds the three dimensional object 103. The type of operation may e.g. be selected by the user via the buttons 111, 112, 113, 114 or any other possible type of control input device 110. As will be seen in Fig. 3, an input for user selection of the function may also be provided on the movable input device 105. Further, the control input device 110 may be used by a user to rotate or otherwise position the three dimensional object 103.

After performing the modification on the three dimensional object 103, the processing device 108 will provide a control signal 109 to the holographic display 101 to display the modified three dimensional object 103 via the holographic display 101.

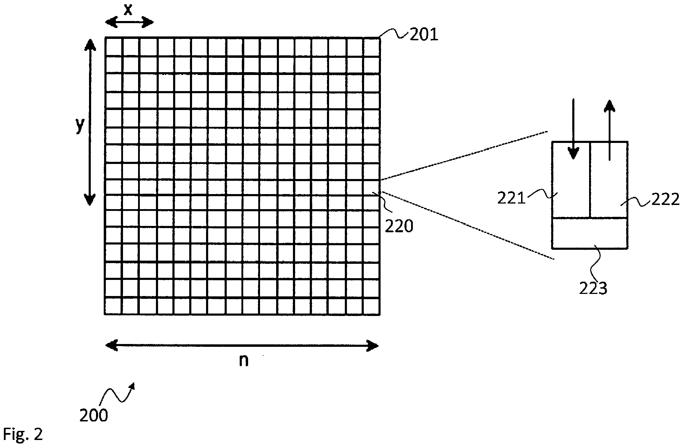

Fig. 2 shows a block diagram of a three dimensional input device 200, especially an embodiment of the holographic display 201 with single sensor cells 220, wherein only one cell is referenced with reference sign 220 for sake of clarity. The holographic display 201 comprises a plurality of cells 220 that are arranged in a grid or matrix like arrangement. The grid may also be seen as a Cartesian grid or coordinate system, where the position of a cell 220 is determined by an X value and a Y value. In the three dimensional input device 200 the holographic display 201 comprises n * n cells 220.

On the right of the holographic display 201 a magnified view of the cell 220 is presented. The cell 220 comprises an optical sensor 221 that senses a light, especially a laser light, emitted by the movable input device (see e.g. Fig. 3). Further, the cell 220 comprises a distance sensor 222. Both the optical sensor 221 and the distance sensor 222 are coupled to a control unit 223. It is understood, that although a dedicated control unit 223 is shown for the cell 220, it is also possible to provide a central control unit that manages all or a subset of all cells 220.

In the cell 220 the optical sensor 221 detects light emitted by the movable input device. Therefore, the cell 220 that receives the light emitted by the movable input device may determine that the movable input device is hovering over the respective cell 220. This allows determining the position of the movable input device in the coordinates of the holographic display 201 or the respective ground plane.

To determine the height of the movable input device, i.e. the distance between the holographic display 201 and the movable input device, the distance sensor 222 is provided in the cell 220.

The control unit 223 that is coupled to the optical sensor 221 and the distance sensor 222 will then provide the respective information to the processing device (not separately shown) for further processing.

It is understood, that the single cells 220 may be coupled to each other and that e.g. only the cell 220 that receives the light from the movable input device with the highest intensity will provide the respective information to the processing device. As alternative the processing device may perform the respective selection.

Fig. 3 shows a block diagram of a three dimensional input device 300, especially the movable input device 305. The movable input device 305 comprises a user input device 325, in this case a button, that may be actuated by the user, wherein status information 326 about the status of the user input device 325 is transmitted to the processing device (not explicitly shown). The status information 326 may e.g. be transmitted via a wired or wireless interface.

In addition, the movable input device 305 comprises a light emitting device 327 at the tip. The light emitting device 327 during operation of the movable input device 305 emits the light that may then be received by the optical sensor as described above.

The user input device 325 may e.g. comprise a single button. This button may be pressed by the user, when he wants to perform a modification to the three dimensional object. This means that the user input device 325 will work like an on/off switch. The type of modification may be fixed or may be selected by the user e.g. via the control input device or via a control program that may run on a computer that is connected to the processing device. It is however also possible that the movable input device 305 may comprise more than one user input device 325. This would e.g. allow the user to select the type of modification to be performed by pressing the respective button.

The light emitting device 327 may e.g. comprise a gimbal-like arrangement that allows the light emitting device 327 to emit the light pointing directly down in vertical direction. As alternative, a controllable mirror arrangement like a MEMS mirror system may be used to guide the light down in vertical direction.

Further, the light emitting device 327 may be positioned at another position than the tip of the movable input device 305, wherein the displacement may be calculated by the processing device. In addition two light emitting devices may be provided to determine the orientation of the movable input device 305.

As can be seen, with the arrangement shown in Figs. 2 and 3 the user may freely move the movable input device 305 over the holographic display 201 and modify a three dimensional object that is displayed over the holographic display 201.

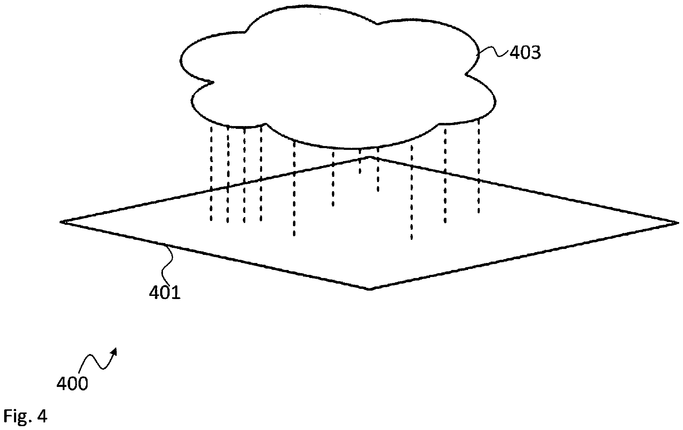

Fig. 4 shows a block diagram of a three dimensional input device 400 with a holographic display 401 that displays a cloud like three dimensional object 403.

The holographic display 401 may use any holographic technology, like e.g. a laser plasma display, a micromagnetic piston display, a holographic television display, a touchable hologram or the like.

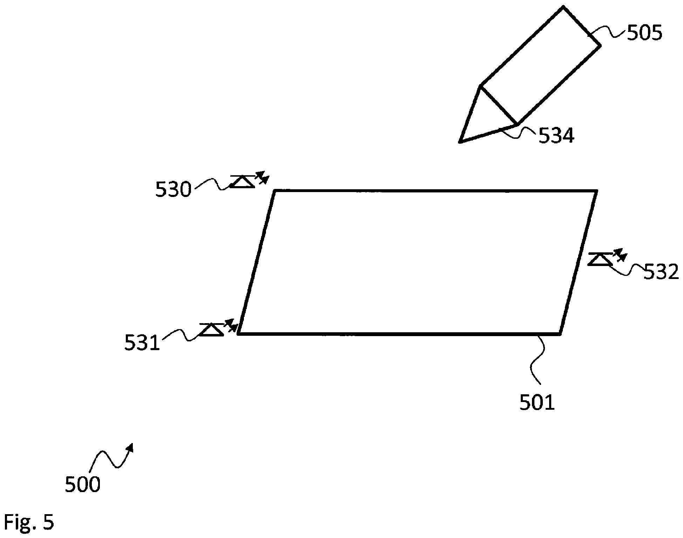

Fig. 5 shows a block diagram of a three dimensional input device 500. The three dimensional input device 500 comprises an alternative arrangement for detecting the position of the movable input device 505. The movable input device 505 comprises a light sensor 534 and three exemplary light emitting elements 530, 531, 532 are arranged around the holographic display 501. It is understood, that any other number of light emitting elements is possible and that the positions of the light emitting elements 530, 531, 532 may be chosen as required.

The movable input device 505 determines its own position by analyzing the light it receives from the light emitting elements 530, 531, 532. The movable input device 505 may e.g. set the intensities of the received light into relation and perform a kind of triangulation to determine its position. In addition or as alternative, the movable input device 505 may comprise inertial sensors that measure the movement and accelerations of the movable input device 505. This would allow performing a kind of dead reckoning to determine the position and orientation of the movable input device 505.

It is understood, that the light emitting elements 530, 531, 532 may e.g. emit visible light. As alternative, the light emitting elements 530, 531, 532 may emit non-visible light, like e.g. infra-red light. It is understood, that the light sensor 534 is adapted accordingly to receive or sense light in the respective spectrum.

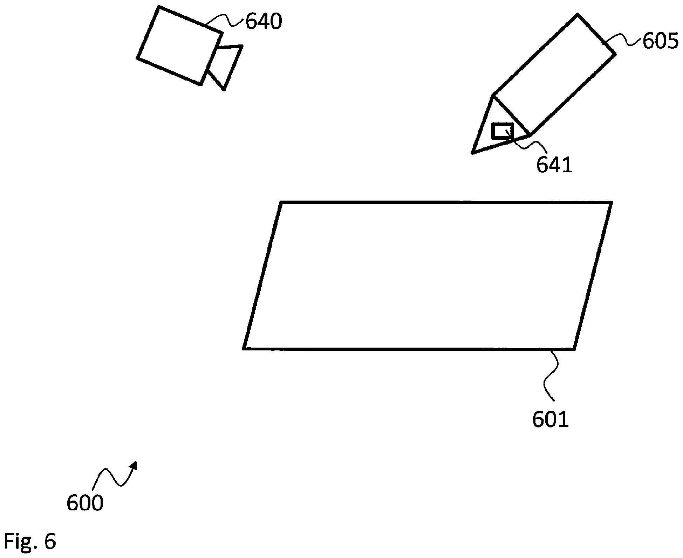

Fig. 6 shows a block diagram of a three dimensional input device 600. The three dimensional input device 600 comprises another alternative arrangement for detecting the position of the movable input device 605.

The three dimensional input device 600 comprises a camera 640 and the movable input device 605 comprises a marker 641 that may be tracked by the camera 640. It is understood, that more than one camera 640 may be used and that the movable input device 605 may comprise more than one marker 641.

It is understood, that the position and orientation of the camera 640 are either known or may be determined during a calibration procedure. Such a calibration procedure may comprise indicating to the user specific spots over the holographic display 601, e.g. by displaying respective indicators. When the user moves the movable input device 605 to the indicated spots, the position of the movable input device 605 in the camera image may be related to the position of the indicated spot. From then on, the position of the movable input device 605 may be determined in relation to the holographic display 601 by analyzing the position of the movable input device 605 in the camera image.

The camera 640 may e.g. be sensitive in the infra-red spectrum and the marker 641 may be an infra-red emitting marker 641. In addition to the camera 640 and the marker 641 one or more infrared emitters may be provided that illuminate the marker.

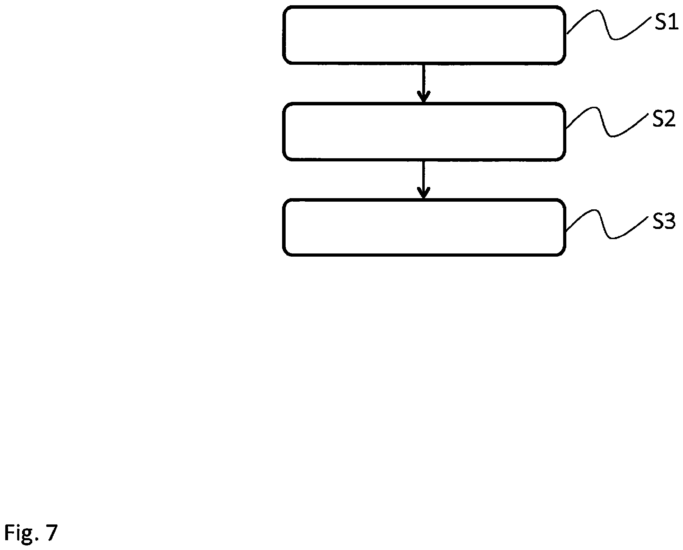

For sake of clarity in the following description of the method based Fig. 7 the reference signs used above in the description of apparatus based Figs. 1 - 6 will be maintained.

Fig. 7 shows a flow diagram of an input method for receiving three dimensional input.

The input method comprises determining S1 a position of a movable input device 105, 305, 505, 605 over a holographic display 101, 201, 401, 501, 601, modifying S2 a three dimensional object 103, 403 based on the determined position of the movable input device 105, 305, 505, 605, and controlling S3 the holographic display 101, 201, 401, 501, 601 to display the modified three dimensional object 103, 403.

The input method may comprise modifying the three dimensional object 103, 403 based on status information 326 about user input devices 325 that are arranged on the movable input device 105, 305, 505, 605.

In an embodiment, determining the position of the movable input device 105, 305, 505, 605 may comprise emitting light with a light emitting device 327 that is arranged on the movable input device 105, 305, 505, 605, receiving the emitted light with a plurality of optical sensors 221 arranged in a grid-like arrangement on the holographic display 101, 201, 401, 501, 601, and determining the position of the movable input device 105, 305, 505, 605 in relation to the holographic display 101, 201, 401, 501, 601 based on the light received by the optical sensors 221.

In addition, determining the position of the movable input device 105, 305, 505, 605 may comprise measuring the distance between the movable input device 105, 305, 505, 605 and a surface of the holographic display 101, 201, 401, 501, 601.

In addition or as alternative, determining the position of the movable input device 105, 305, 505, 605 may comprise emitting light with a plurality of light emitting elements 530, 531, 532 that are arranged on the holographic display 101, 201, 401, 501, 601, and detecting the intensity of the incoming light for every one of the light emitting elements 530, 531, 532 at the movable input device 105, 305, 505, 605, and determining the position of the movable input device 105, 305, 505, 605 in relation to the light emitting elements 530, 531, 532 based on the detected intensities.

Further, in addition or as alternative, determining the position of the movable input device 105, 305, 505, 605 may comprise recording images of a marker 641 on the movable input device 105, 305, 505, 605 with a number of cameras 640 that are arranged around the holographic display 101, 201, 401, 501, 601, and determining the position of the movable input device 105, 305, 505, 605 based on the camera images of the cameras 640.

The input method may also comprise adapting the display of the three dimensional object 103, 403 via the holographic display 101, 201, 401, 501, 601 according to user input received via control input devices 110, and/or outputting object data of the three dimensional object 103, 403.

Although specific embodiments have been illustrated and described herein, it will be appreciated by those of ordinary skill in the art that a variety of alternate and/or equivalent implementations exist. It should be appreciated that the exemplary embodiment or exemplary embodiments are only examples, and are not intended to limit the scope, applicability, or configuration in any way. Rather, the foregoing summary and detailed description will provide those skilled in the art with a convenient road map for implementing at least one exemplary embodiment, it being understood that various changes may be made in the function and arrangement of elements described in an exemplary embodiment without departing from the scope as set forth in the appended claims and their legal equivalents. Generally, this application is intended to cover any adaptations or variations of the specific embodiments discussed herein.

The present invention provides an input device for receiving three dimensional object information, the input device comprising a holographic display arranged in a ground plane of the input device and configured to display a three dimensional object, a movable input device configured to move over the holographic display, a position sensor configured to determine the position of the movable input device over the holographic display, and a processing device that is coupled to the holographic display and the position sensor and that is configured to modify the three dimensional object based on the detected position of the movable input device and to control the holographic display to display the modified three dimensional object. Further, the present invention provides a respective method.

### List of reference signs

- 100, 200, 300, 400, 500, 600: input device
- 101, 201, 401, 501, 601: holographic display
- 102: ground plane
- 103, 403: three dimensional object

- 105, 305, 505, 605: movable input device
- 106: position sensor
- 107: position information
- 108: processing device
- 109: control signal

- 110: control input device
- 111, 112, 113, 114: buttons
- 115: communication interface

- 220: cell
- 221: optical sensor
- 222: distance sensor
- 223: control unit

- 325: user input device
- 326: status information
- 327: light emitting device

- 530, 531, 532: light emitting element
- 534: light sensor

- 640: camera
- 641: marker
- S1, S2, S3: method step

## Claims

1. Three dimensional input device (100, 200, 300, 400, 500, 600), the three dimensional input device (100, 200, 300, 400, 500, 600) comprising:
a holographic display (101, 201, 401, 501, 601) arranged in a ground plane (102) of the three dimensional input device (100, 200, 300, 400, 500, 600) and configured to display a three dimensional object (103, 403),
a movable input device (105, 305, 505, 605) configured to move over the holographic display (101, 201, 401, 501, 601),
a position sensor (106) configured to determine the position of the movable input device (105, 305, 505, 605) over the holographic display (101, 201, 401, 501, 601), and
a processing device (108) that is coupled to the holographic display (101, 201, 401, 501, 601) and the position sensor (106) and that is configured to modify the three dimensional object (103, 403) based on the detected position of the movable input device (105, 305, 505, 605) and to control the holographic display (101, 201, 401, 501, 601) to display the modified three dimensional object (103, 403).

2. Three dimensional input device (100, 200, 300, 400, 500, 600) according to claim 1, wherein the movable input device (105, 305, 505, 605) comprises a number of user input devices (325) and is configured to provide status information (326) about the user input devices (325) to the processing device (108), wherein the processing device (108) is configured to modify the three dimensional object (103, 403) based on the status information (326) of the user input devices (325).

3. Three dimensional input device (100, 200, 300, 400, 500, 600) according to any one of the preceding claims, wherein the position sensor (106) comprises a plurality of optical sensors (221) arranged in a grid-like arrangement on the holographic display (101, 201, 401, 501, 601), wherein the movable input device (105, 305, 505, 605) comprises a light emitting device (327) configured to emit light to the optical sensors (221), and wherein the position sensor (106) further comprises a position processing unit configured to determine the position of the movable input device (105, 305, 505, 605) in relation to the holographic display (101, 201, 401, 501, 601) based on the light received by the optical sensors (221).

4. Three dimensional input device (100, 200, 300, 400, 500, 600) according to claim 3, wherein the movable input device (105, 305, 505, 605) comprises a distance sensor (222) configured to measure the distance between the movable input device (105, 305, 505, 605) and a surface of the holographic display (101, 201, 401, 501, 601) and to provide respective distance information to the processing device (108), or wherein the optical sensors (221) each comprise a distance sensor (222) configured to measure the distance between the movable input device (105, 305, 505, 605) and a surface of the holographic display (101, 201, 401, 501, 601) and to provide respective distance information to the processing device (108).

5. Three dimensional input device (100, 200, 300, 400, 500, 600) according to any one of the preceding claims 1 and 2, wherein the position sensor (106) comprises a plurality of light emitting elements (530, 531, 532) arranged on the holographic display (101, 201, 401, 501, 601), and wherein the movable input device (105, 305, 505, 605) comprises a light sensor (534) configured to detect the intensity of the incoming light for every one of the light emitting elements (530, 531, 532) and wherein the movable input device (105, 305, 505, 605) comprises a position determination unit configured to determine the position of the movable input device (105, 305, 505, 605) in relation to the light emitting elements (530, 531, 532) based on the detected intensities.

6. Three dimensional input device (100, 200, 300, 400, 500, 600) according to any one of the preceding claims 1 and 2, wherein the position sensor (106) comprises a number of cameras (640) arranged around the holographic display (101, 201, 401, 501, 601) that are coupled to the processing device (108), and wherein the movable input device (105, 305, 505, 605) comprises a marker (641) that is detectable by the cameras (640), wherein the processing device (108) is configured to determine the position of the movable input device (105, 305, 505, 605) based on the camera images of the cameras (640).

7. Three dimensional input device (100, 200, 300, 400, 500, 600) according to any one of the preceding claims, comprising control input devices (110) coupled to the processing device (108), wherein the processing device (108) is configured to adapt the display of the three dimensional object (103, 403) via the holographic display (101, 201, 401, 501, 601) according to user input received via the control input devices (110).

8. Three dimensional input device (100, 200, 300, 400, 500, 600) according to any one of the preceding claims, comprising a communication interface (115) configured to output object data of the three dimensional object (103, 403).

9. Input method for receiving three dimensional input, the input method comprising:
determining (S1) a position of a movable input device (105, 305, 505, 605) over a holographic display (101, 201, 401, 501, 601),
modifying (S2) a three dimensional object (103, 403) based on the determined position of the movable input device (105, 305, 505, 605), and
controlling (S3) the holographic display (101, 201, 401, 501, 601) to display the modified three dimensional object (103, 403).

10. Input method according to claim 9, comprising modifying the three dimensional object (103, 403) based on status information (326) about user input devices (325) that are arranged on the movable input device (105, 305, 505, 605).

11. Input method according to any one of the preceding claims 9 and 10, wherein determining the position of the movable input device (105, 305, 505, 605) comprises emitting light with a light emitting device (327) that is arranged on the movable input device (105, 305, 505, 605), receiving the emitted light with a plurality of optical sensors (221) arranged in a grid-like arrangement on the holographic display (101, 201, 401, 501, 601), and determining the position of the movable input device (105, 305, 505, 605) in relation to the holographic display (101, 201, 401, 501, 601) based on the light received by the optical sensors (221).

12. Input method according to claim 11, wherein determining the position of the movable input device (105, 305, 505, 605) comprises measuring the distance between the movable input device (105, 305, 505, 605) and a surface of the holographic display (101, 201, 401, 501, 601).

13. Input method according to any one of the preceding claims 9 and 10, wherein determining the position of the movable input device (105, 305, 505, 605) comprises emitting light with a plurality of light emitting elements (530, 531, 532) that are arranged on the holographic display (101, 201, 401, 501, 601), and detecting the intensity of the incoming light for every one of the light emitting elements (530, 531, 532) at the movable input device (105, 305, 505, 605), and determining the position of the movable input device (105, 305, 505, 605) in relation to the light emitting elements (530, 531, 532) based on the detected intensities.

14. Input method according to any one of the preceding claims 9 and 10, wherein determining the position of the movable input device (105, 305, 505, 605) comprises recording images of a marker (641) on the movable input device (105, 305, 505, 605) with a number of cameras (640) that are arranged around the holographic display (101, 201, 401, 501, 601), and determining the position of the movable input device (105, 305, 505, 605) based on the camera images of the cameras (640).

15. Input method according to any one of the preceding claims 9 to 14, comprising adapting the display of the three dimensional object (103, 403) via the holographic display (101, 201, 401, 501, 601) according to user input received via control input devices (110); and/or
comprising outputting object data of the three dimensional object (103, 403).
